# EUROPEAN PATENT APPLICATION

(11) **EP 4 790 285 A1**
(43) Date of publication of application: **12.08.2026**
(21) Application number: 23954841.5
(22) Date of filing: 06.10.2023
(51) Int. Cl.: F16K 15/14, F04B 43/02, B41J 2/175

(54) **VALVE AND LIQUID SUPPLY CONTAINER**

(71) Applicant: LIXIL Corporation, Tokyo 141-0033 (JP)
(72) Inventor: HIROTA Masaharu, Tokyo 141-0033 (JP); HARAGUCHI Ryo, Tokyo 141-0033 (JP); NARUMI Yousuke, Tokyo 141-0033 (JP); OTA Noritoshi, Tokyo 141-0033 (JP); KOMAKI Hideyuki, Tokyo 141-0033 (JP)
(74) Representative: karo IP
(86) International application number: PCT/JP2023/036612
(87) International publication number: WO 2025/074635

(57) **Abstract**

A valve 150 includes an opening part 53, a root part 52, and a rib part 54. The opening part 53 includes a cut 53a. The root part 52 is formed in a cylindrical shape that forms a flow path continuous with the cut 53a, and the flow path widens from one bottom portion 52a in which the opening part 53 is formed, toward the other bottom portion 52b. The rib part 54 is provided on an outer surface of the root part 52 and projects in a direction intersecting the cut 53a.

## Description

### TECHNICAL FIELD

The present disclosure relates to a valve and a liquid replenishment container.

### BACKGROUND ART

Patent Literature 1 discloses a conventional duckbill valve. This duckbill valve includes a first flow path formation part including a first flow path, and a second flow path formation part including, between a first wall part and a second wall part, a second flow path having a width that increases gradually toward the first flow path formation part. The second flow path formation part has a slit formed at a tip end part. The second flow path communicates with a downstream flow path when the slit is opened, and the communication between the second flow path and the downstream flow path is blocked when the slit is closed. A value of ratio obtained by dividing an inner diameter of the first flow path formation part by an outer diameter of the first flow path formation part is smaller than 0.65, and an angle between the first wall part and the second wall part is within the range from 50 degrees to 65 degrees inclusive. When the pressure difference of the second flow path with respect to the pressure of the downstream flow path is the negative pressure of -75 kPa, the first wall part and the second wall part do not come into contact with each other.

### RELATED-ART LITERATURE

### PATENT LITERATURE

Patent Literature 1: Japanese Unexamined Patent Application Publication No. 2019-105368

### SUMMARY OF INVENTION

### TECHNICAL PROBLEM

The inventors of the subject application examined a valve for a container from which a liquid is replenished to a water discharge device and obtained the following new recognition. The duckbill valve described in Patent Literature 1 has the function of allowing flow from the primary side to the secondary side and preventing flow in the reverse direction. However, with a valve such as a duckbill valve, there has been a problem of, for example, when the pressure on the primary side and the pressure on the secondary side becomes similar after a liquid has continued to flow from the primary side to the secondary side, the liquid's flowing out from the secondary side to the primary side as the valve does not completely close.

A purpose of the present disclosure is to provide a valve and a liquid replenishment container that can suppress the outflow of a liquid.

### SOLUTION TO PROBLEM

To solve the abovementioned issue, one embodiment of the present disclosure is a valve. The valve according to one embodiment includes: an opening part including a cut; a root part of cylindrical shape that forms a flow path continuous with the cut, wherein the flow path widens from one bottom portion in which the opening part is formed, toward the other bottom portion; and a rib part provided on an outer surface of the root part and formed to project in a direction intersecting the cut.

One embodiment of the present disclosure is a liquid replenishment container. The liquid replenishment container according to one embodiment includes: the valve described above; a container body that contains a liquid to be replenished to a water discharge device; and a lid part that covers an opening of the container body and includes a valve hole formed therein into which the valve is inserted.

### BRIEF DESCRIPTION OF DRAWINGS

[Fig. 1] Fig. 1 is an external perspective view of a water discharge device on which a liquid replenishment container according to an embodiment is mounted.
[Fig. 2] Fig. 2 is an external perspective view of a portion of the inside of the water discharge device.
[Fig. 3] Fig. 3 is a block diagram that shows an illustrative configuration of a water passage system and an electrical circuit system of the water discharge device.
[Fig. 4] Fig. 4 is an exploded perspective view of the liquid replenishment container.
[Fig. 5] Fig. 5 is a vertical sectional view of the liquid replenishment container.
[Fig. 6] Fig. 6 is an external perspective view of a supply valve.
[Fig. 7] Fig. 7 is a perspective view that illustrates a vertical cross section of the supply valve.
[Fig. 8] Fig. 8 is an external perspective view of a plug part.
[Fig. 9] Fig. 9 is a plan view of the plug part.
[Fig. 10] Fig. 10 is a magnified vertical sectional view of a supply valve portion.
[Fig. 11] Fig. 11 is a plan view that shows an opening part of the supply valve into which the plug part is inserted.
[Fig. 12] Fig. 12 is an external perspective view of a supply valve according to a modification.
[Fig. 13] Fig. 13 is an external perspective view of a supply valve according to another modification.
[Fig. 14] Fig. 14 is an external perspective view of a supply valve according to yet another modification.
[Fig. 15] Fig. 15 is an external perspective view of a supply valve according to still yet another modification.

### DESCRIPTION OF EMBODIMENTS

There will now be described an embodiment for implementing a water discharge device of the present disclosure. Like reference characters denote like constituting elements, and repetitive description will be omitted. In each drawing, constituting elements may be appropriately omitted, enlarged, or reduced, for the sake of convenience. Each drawing is to be viewed according to the orientation of the reference characters. The structures and shapes referred to in the present specification include not only structures and shapes that exactly match what is mentioned in the present specification, but also structures and shapes that deviate by the amount of errors, such as dimensional errors and manufacturing errors. In each drawing, part of a member less important in describing the embodiment may be omitted.

Terms including ordinal numbers, such as "first" and "second", are used to describe various constituting elements. However, such terms are used only to distinguish one constituting element from another and do not limit the configuration of the present disclosure. Also, the following embodiment is provided as an example to assist in understanding of the present disclosure and does not limit the configuration of the present disclosure.

### Embodiment

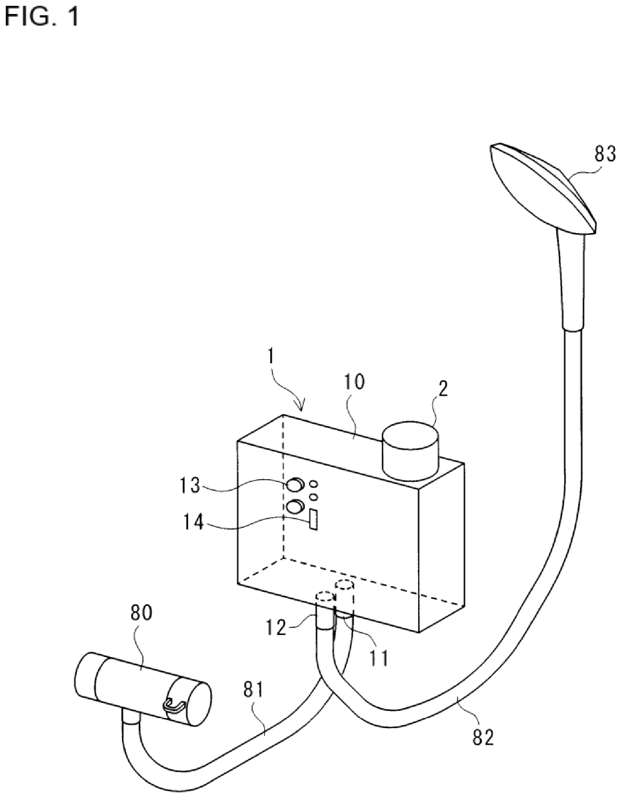

Fig. 1 is now referred to. A water discharge device 1 has a case 10 of rectangular parallelepiped shape that houses piping and various components. To a water supply inlet 11 of the water discharge device 1, a hose 81 extending from a water supply device 80 is connected, and water is supplied from the water supply device 80. The water supply device 80 has, for example, a temperature control function, a flow rate control function, and a function for switching between passing water and stopping water.

To a discharge outlet 12 of the water discharge device 1, a hose 82 of a shower head 83 is connected. The water discharge device 1 discharges one of water or foam through the discharge outlet 12, and the one of water or foam is discharged through the hose 82 and the shower head 83 to the outside. The water discharge device 1 may be connected to a device other than the shower head 83. Also, the water discharge device 1 may directly discharge one of water or foam to the outside. The water discharge device 1 may be configured to include a component for discharging, such as the shower head 83. The water discharge device 1 may have all of the functions of the water supply device 80. Also, the water discharge device 1 may have some of the functions of the water supply device 80.

In the water discharge device 1, a liquid replenishment container 2 is detachably connected to replenish a liquid containing a foaming component. On the front of the case 10, an operation button 13, which can be operated by the user, and an indicator 14, which can be viewed by the user, are provided. The indicator 14 is constituted by a component such as an LED or a liquid crystal display. The size of the case 10 is, for example, about 15 cm in height, 20 cm in width, and 5 cm in depth. The size of the case 10 is not limited thereto.

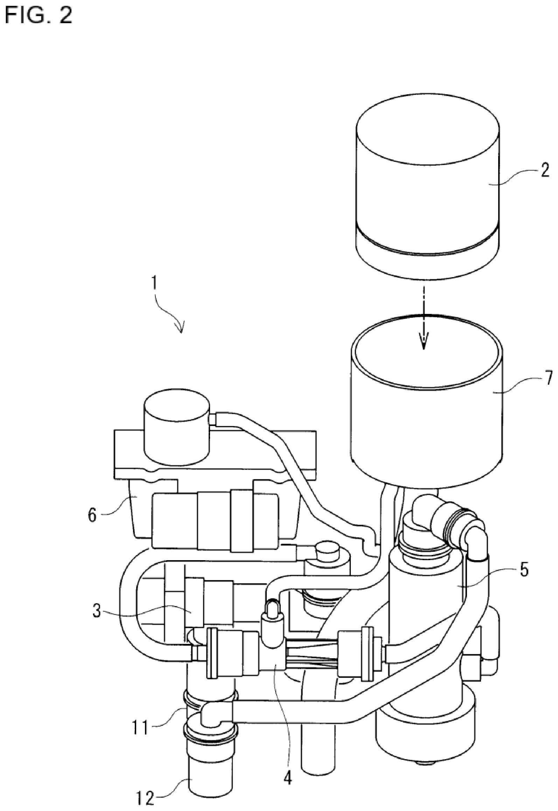

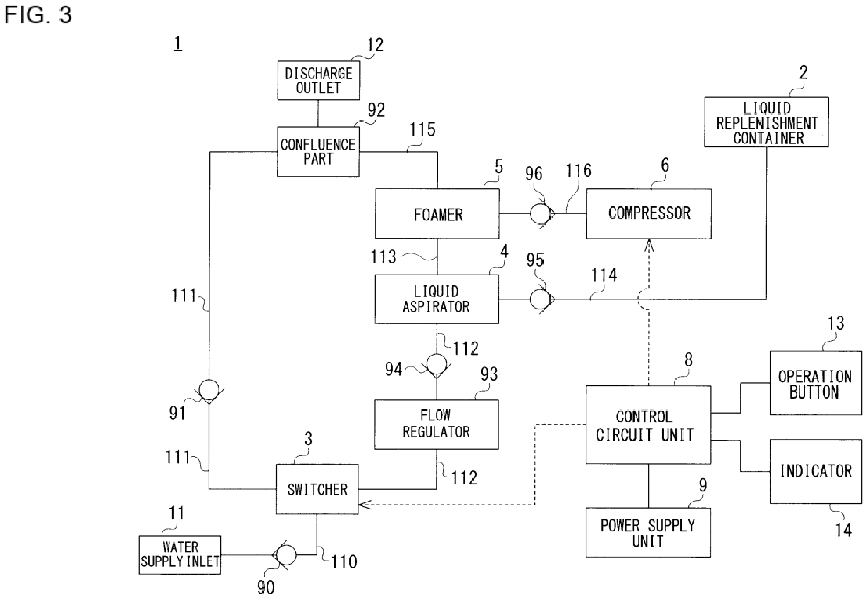

Fig. 2 and Fig. 3 are now referred to. The water discharge device 1 includes a switcher 3, a liquid aspirator 4, a foamer 5, a compressor 6, a container mounting unit 7, a control circuit unit 8, and a power supply unit 9, for example. To the downstream side of the water supply inlet 11 is connected a check valve 90, and the check valve 90 and the switcher 3 are connected by a flow path 110. The check valve 90 prevents backflow of water from the flow path 110 to the water supply inlet 11 side.

The switcher 3 switches passing water through a flow path 111 and a flow path 112 in two directions, which branch off from the flow path 110. One flow path 111 is connected to a confluence part 92. A check valve 91 provided in the flow path 111 prevents backflow from the confluence part 92 side to the switcher 3 side. In the other flow path 112, a flow regulator 93 and a check valve 94 are provided. The flow path 112 is connected to the liquid aspirator 4. The flow regulator 93 is constituted by a constant flow valve, a pressure reducing valve, or the like. The flow regulator 93 adjusts the flow rate on the downstream side to about 1 liter per minute, for example. The check valve 94 prevents backflow from the liquid aspirator 4 side to the switcher 3 side.

The liquid aspirator 4 is, for example, an ejector. The liquid aspirator 4 aspirates the liquid replenished from the liquid replenishment container 2 to mix it with the water flowing in from the flow path 112 and then flows the mixture into a flow path 113 on the downstream side. The liquid replenishment container 2 and the liquid aspirator 4 are connected by a flow path 114. In the flow path 114, a check valve 95 is provided to prevent backflow from the liquid aspirator 4 side to the liquid replenishment container 2 side.

The flow path 113 is connected to the foamer 5. Through the flow path 113, the mixed water, which is a mixture of the liquid containing a foaming component and water, is supplied to the foamer 5. The foamer 5 generates foam by mixing compressed air from the compressor 6 with the mixed water supplied from the flow path 113 and flows the foam into a flow path 115. The compressor 6 sends compressed air to the foamer 5 through a flow path 116 for air. In the flow path 116, a check valve 96 is provided to prevent backflow from the foamer 5 side to the compressor 6 side.

The confluence part 92 is a flow path that joins the flow path 111 and the flow path 115 and connects to the discharge outlet 12. As described previously, the hose 82 of the shower head 83 is connected to the discharge outlet 12.

The control circuit unit 8 receives power supply from the power supply unit 9 and operates the switcher 3 and the compressor 6, for example. The power supply unit 9 is one of various batteries, such as a lithium-ion battery. The power supply unit 9 may be constituted by a power supply circuit for using electricity supplied from a household power supply. The control circuit unit 8 receives operation input from the operation button 13 connected thereto and operates the switcher 3 and the compressor 6, for example. The control circuit unit 8 also allows the indicator 14 to indicate information, such as the operating state of the water discharge device 1 or the remaining amount of the power supply unit 9.

The water discharge device 1 discharges the water supplied from the water supply device 80, through the discharge outlet 12 via the flow path 111, without generating foam. Depending on the switching by the switcher 3, the water discharge device 1 generates foam through the flow paths 112, 113, and 115 and discharges the foam through the discharge outlet 12. The foamer 5 forms fine bubbles, so that the water discharge device 1 discharges fine foam.

The water discharge device 1 switches between a first discharge state of discharging supplied water and a second discharge state of discharging a fluid obtained by mixing an additive into the supplied water. The fluid obtained by mixing an additive in the second discharge state may contain air. The water discharge device 1 may generate, as the fluid obtained by mixing an additive into the supplied water in the second discharge state, foam by mixing a liquid containing a foaming component into the supplied water and further mixing air thereinto and may discharge the foam through the discharge outlet 12. The water discharge device 1 may mix, into the supplied water, various additives for cleaning the user's body, for beauty, for health promotion, and the like. When the water discharge device 1 mixes an additive other than a liquid containing a foaming component into the supplied water, the foamer 5 may be substituted with an ejector, and the compressor 6 may be substituted with an air intake mechanism.

The liquid replenishment container 2 contains a liquid additive to be mixed into water supplied to the water discharge device 1. The liquid replenishment container 2 is attachable to and detachable from the water discharge device 1 and can be replaced with a new one when the liquid in the container runs out. For the water discharge device 1, multiple liquid replenishment containers 2 filled with liquids of different fragrances may be prepared, for example, and the user can replace the liquid replenishment container 2 according to his or her mood before the liquid runs out. Since the additive is supplied through attachment and detachment of the liquid replenishment container 2, the water discharge device 1 can be downsized.

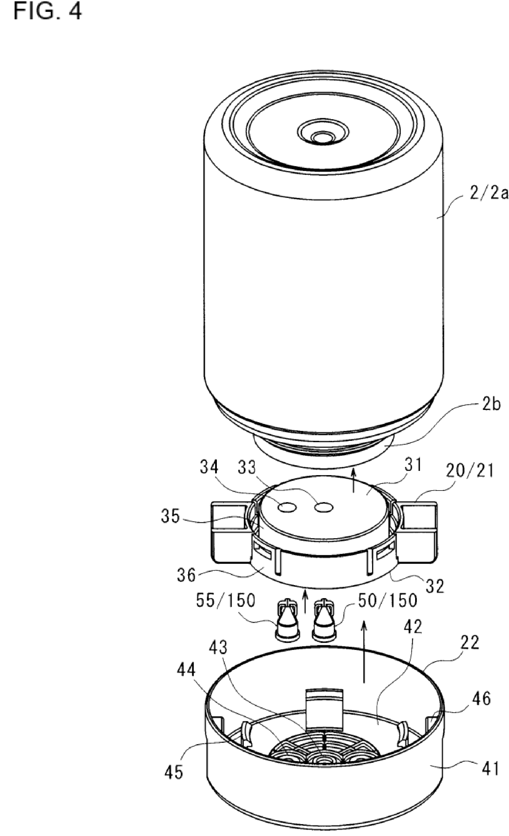

Fig. 4 is now referred to. The liquid replenishment container 2 includes a container body 2a, a lid part 20, and valves 150 constituted by a supply valve 50 and an intake valve 55. The container body 2a is a hollow cylindrical container that contains a liquid inside. The container body 2a has an opening 2b of cylindrical shape. Onto the opening 2b, the lid part 20 is attached. The lid part 20 includes an inner lid 21 and an outer lid 22 and is attached to cover the opening 2b.

The inner lid 21 has a flattened cylindrical shape and has multiple valve holes 33 and 34 piercing through a bottom portion 31 and a bottom portion 32. The valve hole 33 is provided in the center, and the valve hole 34 is provided at an eccentric position. Into the valve hole 33, the supply valve 50 is attached. Into the valve hole 34, the intake valve 55 is attached.

The inner lid 21 includes side wall portions 35 and 36. The side wall portion 35 is cylindrical, and the bottom portion 31 is formed at the end on the container body 2a side. The side wall portion 35 is fitted to the inner side of the opening 2b of the container body 2a. The side wall portion 36 is larger in diameter than the side wall portion 35 and fitted to the outer side of the opening 2b of the container body 2a.

The outer lid 22 has a flattened cylindrical shape and is attached to cover the inner lid 21. A side wall portion 41 of the outer lid 22 is fitted to the inner surface of the container mounting unit 7 provided on the water discharge device 1 side. A bottom portion 42 of the outer lid 22 has valve holes 43 and 44 piercing through the bottom portion 42, at positions corresponding to the valve holes 33 and 34 of the inner lid 21. The bottom portion 42 includes a click portion 45 that is hooked on the side wall portion 36 of the inner lid 21, at each of four circumferential positions that are equally spaced. The outer lid 22 includes a mounting portion 46 formed such as to penetrate the side wall portion 41.

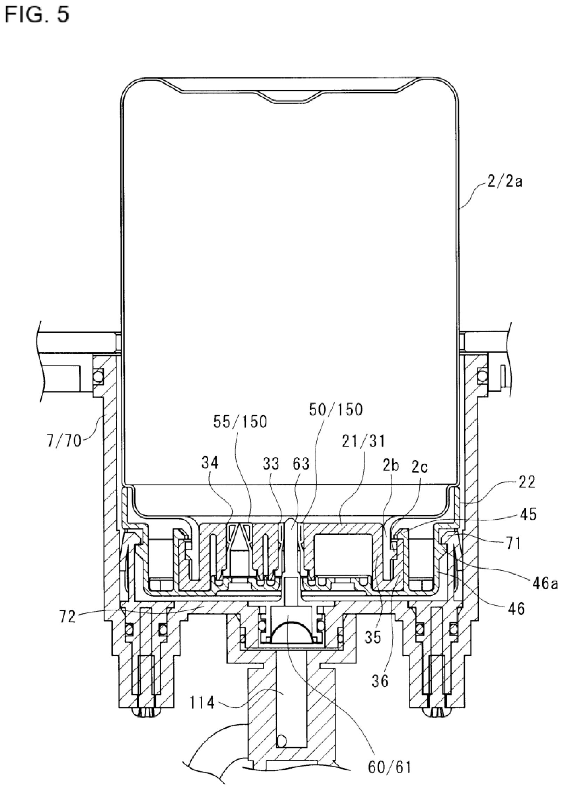

Fig. 5 is now referred to. The side wall portion 35 of the inner lid 21 is fitted to be in close contact with the inner side of the opening 2b of the container body 2a. The side wall portion 36 of the inner lid 21 is fitted to an annular projection portion 2c provided on the outer side of the opening 2b of the container body 2a, so that the coming out of the side wall portion 36 is prevented. The click portions 45 of the outer lid 22 are hooked on the side wall portion 36 of the inner lid 21. The mounting portion 46 of the outer lid 22 includes a projection portion 46a. On the projection portion 46a, a click portion 71 formed on the inner side of a side wall portion 70 of the container mounting unit 7 is hooked.

On a bottom portion 72 of the container mounting unit 7, a plug part 60 is provided. A plug 63 of the plug part 60 extends toward the liquid replenishment container 2 side and is inserted into the supply valve 50. The supply valve 50 is placed in an open state when the plug 63 is inserted thereinto. When the supply valve 50 is in the open state, the liquid contained in the liquid replenishment container 2 flows into the flow path 114 through the plug 63.

The supply valve 50 and the intake valve 55 are held such as to be sandwiched between the inner lid 21 and the outer lid 22.

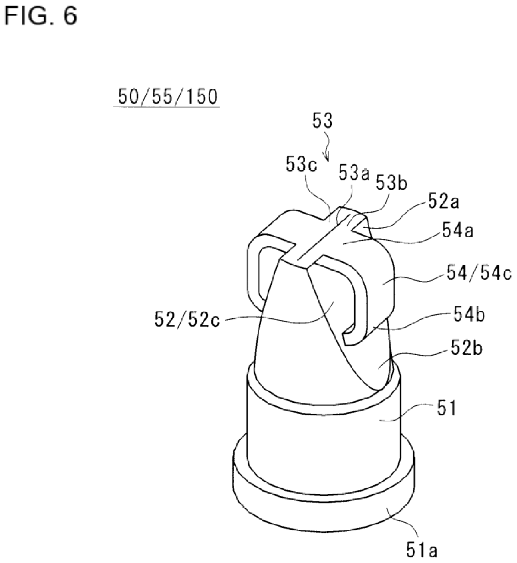

Fig. 6 is now referred to. The supply valve 50 and the intake valve 55, which constitute the valves 150, are formed of an elastic material such as rubber and have similar structures. The supply valve 50 and the intake valve 55 may be duckbill valves or the like. In the following, the supply valve 50 will be described as an example. The supply valve 50 includes a sealing part 51, a root part 52, an opening part 53, and a rib part 54 and is formed cylindrically as a whole. The sealing part 51 is cylindrical and includes at one end thereof a brim 51a extending outward. The other end of the sealing part 51 is continuous with the root part 52. The sealing part 51 is provided on the outside of the opening part 53 when viewed from the container body 2a side.

The root part 52 is hollow and cylindrical and extends in a spatula shape, and the opening part 53 is formed in one bottom portion 52a. The other bottom portion 52b of the root part 52 is connected to the other end of the sealing part 51. The root part 52 widens from the one bottom portion 52a toward the other bottom portion 52b. In the opening part 53, a cut 53a of linear shape is provided. The opening part 53 is in a closed state when peripheral edge portions 53b and 53c on both sides of the cut 53a are in close contact. In a free state with no load applied, the opening part 53 is in the closed state.

The opening part 53 is placed in an open state when the peripheral edge portions 53b and 53c are elastically deformed in the directions of receding from the cut 53a. The directions in which the peripheral edge portions 53b and 53c are deformed when the opening part 53 is placed in the open state are directions perpendicular to a direction in which the cut 53a extends and a central axis direction of the supply valve 50. The central axis direction of the supply valve 50 is the same as the insertion direction of the plug 63 on the container mounting unit 7 side into the supply valve 50. The opening part 53 is placed in the open state when the peripheral edge portions 53b and 53c are elastically deformed in the directions that intersect the insertion direction of the plug 63 inserted into the supply valve 50.

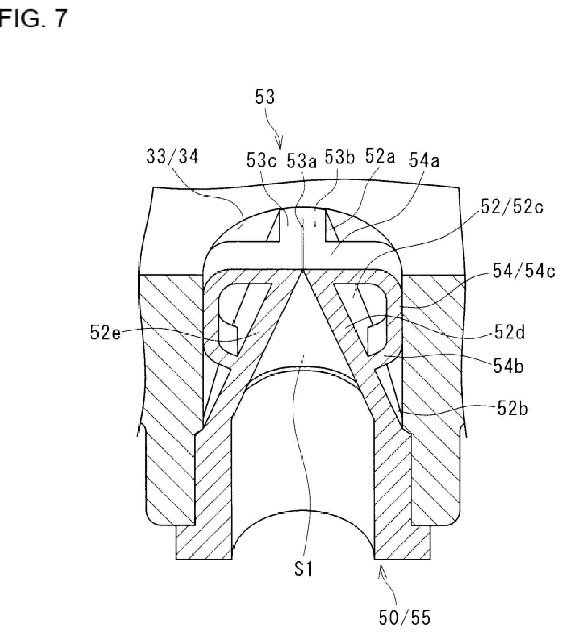

Fig. 7 is now referred to. The root part 52 includes a first wall portion 52d and a second wall portion 52e extending from the one bottom portion 52a to the other bottom portion 52b. The first wall portion 52d and the second wall portion 52e are inclined with respect to an axial direction of the root part 52 so that the distance therebetween widens from the one bottom portion 52a toward the other bottom portion 52b. A flow path S1 formed inside the root part 52 widens from the one bottom portion 52a toward the other bottom portion 52b. The flow path S1 is continuous with the cut 53a.

The rib part 54 is provided on an outer surface 52c of the root part 52 and formed to project in a direction intersecting the cut 53a and an axial direction of the root part 52. The rib part 54 is connected at one end 54a to the one bottom portion 52a of the root part 52, extends from the one end 54a in a direction intersecting the cut 53a and an axial direction of the root part 52, and bends and further extends in an axial direction of the root part 52. The other end 54b of the rib part 54 is connected to the root part 52 at a position closer to the other bottom portion 52b.

The rib part 54 is provided to extend from the one bottom portion 52a toward the other bottom portion 52b of the root part 52. The rib part 54 is provided on each of the first wall portion 52d and the second wall portion 52e. An outer edge portion 54c of the rib part 54 comes into contact with an inner surface of the valve hole 33 into which the root part 52 is inserted.

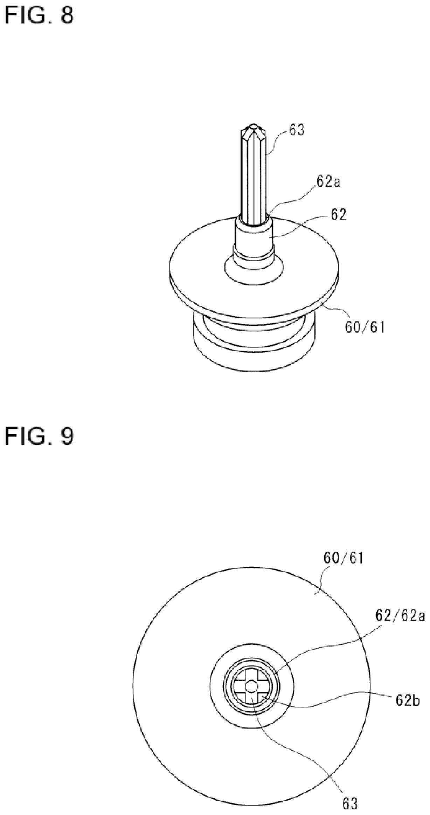

Fig. 8 and Fig. 9 are now referred to. The plug part 60 includes a plug body 61, a trunk portion 62, and the plug 63. The plug body 61 is cylindrical, and a flow path through which a liquid flows is formed therein. The trunk portion 62 is cylindrical and extends from the plug body 61 toward the liquid replenishment container 2 side. The inside of the trunk portion 62 communicates with the inside of the plug body 61. The plug 63 has a rod shape that extends from an end 62a of the trunk portion 62 toward the liquid replenishment container 2 side and is supported by the trunk portion 62. The plug 63 is shaped such that the outer surface thereof is cut away, with plate-like members left on two perpendicular diameters on a cross section intersecting a central axis direction.

At the end 62a of the trunk portion 62, multiple through holes 62b are formed between the plug 63 and the trunk portion 62. The through holes 62b communicate with the inside of the trunk portion 62 and the inside of the plug body 61. The liquid supplied from the liquid replenishment container 2 flows through the multiple through holes 62b, the inside of the trunk portion 62, and the inside of the plug body 61 into the flow path 114.

There will now be described the operation for mounting the liquid replenishment container 2 onto the water discharge device 1. At the stage before the liquid replenishment container 2 is mounted onto the water discharge device 1, the liquid replenishment container 2 is carried in an arbitrary posture. For example, a user may hold the liquid replenishment container 2 with the lid part 20 on the top or may hold the container upside down. The supply valve 50 of the liquid replenishment container 2 is in a free state and placed in the closed state when the plug 63 is not inserted. The intake valve 55 is also in a free state and placed in the closed state.

When the lid part 20 of the liquid replenishment container 2 is placed on the bottom, the liquid in the container body 2a provides a weight and adds a load to the supply valve 50 and the intake valve 55. The load added by the liquid is applied in the direction of bringing the peripheral edge portions 53b and 53c of the opening part 53 of each of the supply valve 50 and the intake valve 55 into close contact with each other, so that the closed state is maintained. The rib parts 54 in each of the supply valve 50 and the intake valve 55 assist in bringing the peripheral edge portions 53b and 53c of the opening part 53 into close contact with each other.

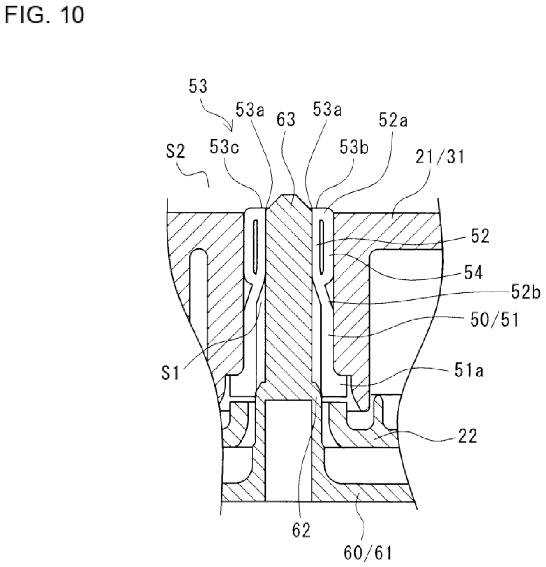

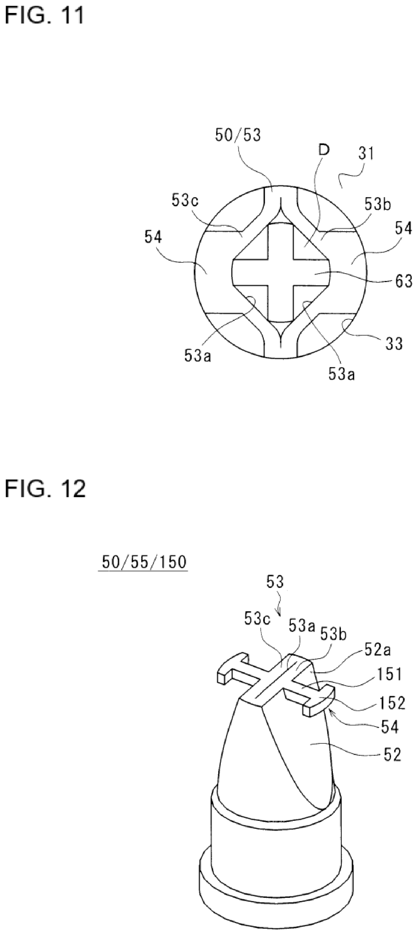

Fig. 10 and Fig. 11 are now referred to. When the liquid replenishment container 2 is mounted on the water discharge device 1, the plug 63 is inserted into the supply valve 50. The opening part 53 of the supply valve 50 is placed in the open state when the plug 63 is inserted. The peripheral edge portions 53b and 53c of the opening part 53 are elastically deformed in the directions that intersect the insertion direction of the plug 63, and the cut 53a is opened. Each rib part 54 is elastically deformed by receiving compression force such as to be pushed in between the peripheral edge portion 53b or 53c of the opening part 53 and the inner surface of the valve hole 33. As shown in Fig. 11, gaps D are created between the opening part 53 and the plug 63.

The liquid in the container body 2a flows out through the gaps D and is supplied to the water discharge device 1 through the through holes 62b of the plug part 60. The liquid replenishment container 2 is placed in the closed state or the open state with the structure of the plug 63 being removed from or inserted into the supply valve 50. Therefore, it is advantageous for simplifying the configuration of the valve part, enabling cost reduction.

The sealing part 51 of the supply valve 50 is fitted with the trunk portion 62 that supports the plug 63 and is in close contact with the trunk portion 62 to prevent liquid leakage. The supply valve 50 is formed of an elastic material such as rubber, as described previously, and can be brought into close contact with the trunk portion 62. Since the position of the supply valve 50 is maintained, positional deviation of the sealing part 51 is suppressed, thereby maintaining the function of preventing liquid leakage.

The supply valve 50 is held such that the brim 51a is sandwiched between the inner lid 21 and the outer lid 22. The supply valve 50 can be held by means of a simple configuration with the inner lid 21 and the outer lid 22.

The intake valve 55 can be configured in the same manner as the supply valve 50. As described previously, when the lid part 20 of the liquid replenishment container 2 is placed on the bottom, the intake valve 55 is placed in the closed state. When the liquid in the container body 2a is supplied to the water discharge device 1 and the pressure in the container body 2a decreases, air is drawn in through the intake valve 55. The intake valve 55 is placed in the open state at the moment air is drawn in. At the moment the intake valve 55 is placed in the open state, the intake valve 55 holds the liquid in the container body 2a by means of the drawn air, thereby suppressing liquid leakage.

As with the supply valve 50, the intake valve 55 is also held such that the brim 51a is sandwiched between the inner lid 21 and the outer lid 22. The intake valve 55 can be held by means of a simple configuration with the inner lid 21 and the outer lid 22.

When the liquid replenishment container 2 is removed from the water discharge device 1, the plug 63 is pulled out of the supply valve 50. The rib parts 54 of the supply valve 50 are elastically deformed such as to return to the original state by means of restoring force and exert force on the peripheral edge portions 53b and 53c of the opening part 53 in the directions of closing the cut 53a. With the rib parts 54 provided, the supply valve 50 has higher restoring force to close the cut 53a, thereby suppressing the outflow of the liquid.

In the supply valve 50, since the rib parts 54 are provided to extend from the one bottom portion 52a toward the other bottom portion 52b of the root part 52, the rib parts 54 certainly come into contact with the inner surface of the valve hole 33, and the restoring force of the rib parts 54 can be exerted.

In the supply valve 50, since the one end 54a of each rib part 54 is connected to the one bottom portion 52a of the root part 52, the force to close the cut 53a can be exerted at positions close to the peripheral edge portions 53b and 53c of the cut 53a of the opening part 53. In the supply valve 50, since the other end 54b of each rib part 54 is connected to the root part 52 at a position closer to the other bottom portion 52b, the restoring force to close the cut 53a of the opening part 53 can be exerted from positions on the other bottom portion 52b side of the root part 52.

In the supply valve 50, since each rib part 54 is in contact with the inner surface of the valve hole 33, the rib part 54 is elastically deformed such as to be pushed in between the peripheral edge portion 53b or 53c of the opening part 53 and the inner surface of the valve hole 33, so that the restoring force can be exerted on the opening part 53.

When the plug 63 is not inserted into the supply valve 50, the rib parts 54 may be in contact with the inner surface of the valve hole 33. Also, when the plug 63 is not inserted into the supply valve 50, there may be gaps between the rib parts 54 and the inner surface of the valve hole 33. The supply valve 50 may desirably be configured such that, when the plug 63 is inserted thereinto, the gaps between the rib parts 54 and the inner surface of the valve hole 33 are filled, and each rib part 54 is elastically deformed such as to be pushed in between the peripheral edge portion 53b or 53c and the inner surface of the valve hole 33.

The supply valve 50 functions such that, when the plug 63 is inserted, the liquid in a space S2 within the container body 2a flows into the flow path S1 and, when the plug 63 is pulled out, leakage of the liquid into the flow path S1 is suppressed.

When the flow path S1 side is defined as the primary side and the space S2 side is defined as the secondary side, the supply valve 50 may also be used in a circuit configuration in which a liquid flows from the primary side to the secondary side. The supply valve 50 functions such that, when the pressure of the liquid on the primary side (flow path S1 side) increases, the cut 53a of the opening part 53 opens and the liquid flows to the secondary side (space S2 side). When the pressure of the liquid on the primary side decreases and approaches the pressure on the secondary side, the cut 53a of the opening part 53 in the supply valve 50 closes and the flow of the liquid to the secondary side stops, and the outflow of the liquid from the secondary side to the primary side can be suppressed.

### Modifications

Fig. 12 is now referred to. The valves 150 constituted by the supply valve 50 and the intake valve 55 according to a modification include the rib parts 54 that project from the one bottom portion 52a of the root part 52 in directions intersecting the cut 53a and an axial direction of the root part 52. Each rib part 54 includes a base portion 151 of stick shape that extends from the one bottom portion 52a of the root part 52 in a direction intersecting the cut 53a and an axial direction of the root part 52, and an outer edge portion 152 of arc shape provided at the tip of the base portion 151. The outer edge portion 152 of each rib part 54 comes into contact with the inner surface of the valve hole 33.

In the valves 150 according to the modification, since each rib part 54 is in contact with the inner surface of the valve hole 33, the rib part 54 is pushed in between the peripheral edge portion 53b or 53c of the opening part 53 and the inner surface of the valve hole 33 and elastically deformed, so that the restoring force can be exerted on the opening part 53.

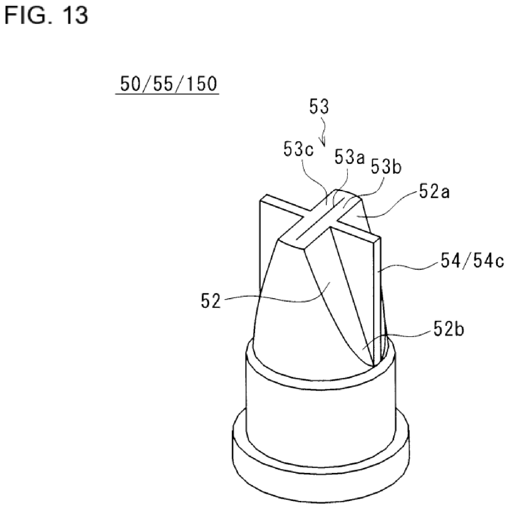

Fig. 13 is now referred to. The valves 150 according to another modification include the rib parts 54 of plate shape that extend from the one bottom portion 52a to the other bottom portion 52b of the root part 52. Each rib part 54 projects in a direction intersecting the cut 53a and an axial direction of the root part 52. The outer edge portion 54c of each rib part 54 comes into contact with the inner surface of the valve hole 33.

In the valves 150, since each rib part 54 is in contact with the inner surface of the valve hole 33, the rib part 54 is pushed in between the peripheral edge portion 53b or 53c of the opening part 53 and the inner surface of the valve hole 33 and elastically deformed, so that the restoring force can be exerted on the opening part 53.

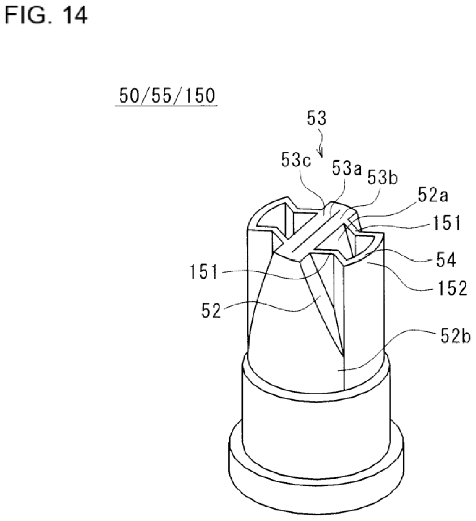

Fig. 14 is now referred to. The valves 150 according to yet another modification include the rib parts 54 that project from the one bottom portion 52a to the other bottom portion 52b of the root part 52 in directions intersecting the cut 53a and an axial direction of the root part 52. Each rib part 54 includes the base portion 151 that extends in a direction intersecting the cut 53a and an axial direction of the root part 52 and bends in the middle, and the outer edge portion 152 of arc shape provided at the tip of the base portion 151. The outer edge portion 152 of each rib part 54 is formed from the one bottom portion 52a to the other bottom portion 52b of the root part 52. The rib parts 54 come into contact with the inner surface of the valve hole 33. The outer edge portion 152 of each rib part 54 comes into contact with the inner surface of the valve hole 33.

In the valves 150, since each rib part 54 is in contact with the inner surface of the valve hole 33, the rib part 54 is pushed in between the peripheral edge portion 53b or 53c of the opening part 53 and the inner surface of the valve hole 33 and elastically deformed, so that the restoring force can be exerted on the opening part 53.

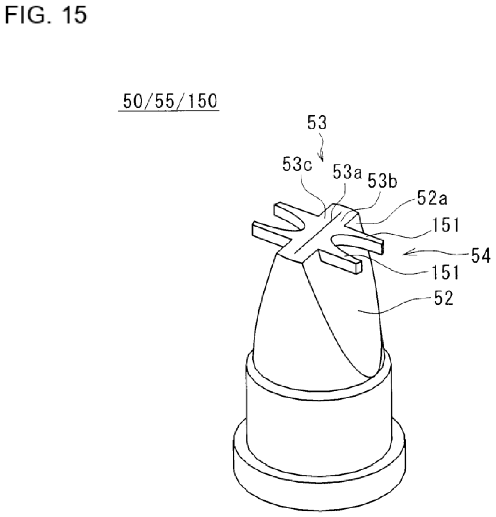

Fig. 15 is now referred to. The valves 150 according to still yet another modification include the rib parts 54 that project from the one bottom portion 52a of the root part 52 in directions intersecting the cut 53a and an axial direction of the root part 52. Each rib part 54 includes two base portions 151 of stick shape that each extend from the one bottom portion 52a of the root part 52 in a direction intersecting the cut 53a and an axial direction of the root part 52. The two base portions 151 are spaced apart in a direction in which the cut 53a extends. The tip of each of the base portions 151 of the rib parts 54 comes into contact with the inner surface of the valve hole 33.

In the valves 150, since each rib part 54 is in contact with the inner surface of the valve hole 33, the rib part 54 is pushed in between the peripheral edge portion 53b or 53c of the opening part 53 and the inner surface of the valve hole 33 and elastically deformed, so that the restoring force can be exerted on the opening part 53.

The valves 150 constituted by the supply valve 50 and the intake valve 55 need not necessarily be cylindrical and may be polygonal tubular. Similarly, each of the container body 2a, and the inner lid 21 and the outer lid 22 of the lid part 20 need not necessarily be cylindrical and may be polygonal tubular.

The supply valve 50 and the intake valve 55 may be configured to be held by one of the inner lid 21 and the outer lid 22, instead of by being sandwiched between the inner lid 21 and the outer lid 22 as described above.

The shape of the plug 63 provided in the container mounting unit 7 of the water discharge device 1 is not limited to that in the example described above. The plug 63 may have any shape as long as a gap D is created between the opening part 53 of the supply valve 50 and the plug 63 when the plug 63 is inserted into the supply valve 50.

Optional combinations of constituting elements described above are also effective as aspects of the technical ideas abstracted from the embodiment and modifications. For example, with an embodiment, an arbitrary matter described in another embodiment may be combined. Also, with a modification, an arbitrary matter described in an embodiment or another modification may be combined.

An embodiment and modifications have been described. In understanding the technical ideas abstracted from the embodiment and modifications, the technical ideas should not be interpreted as limited to the contents of the embodiment and modifications. Each of the aforementioned embodiment and modifications merely describes a specific example, and various design modifications, including changes, addition, and deletion of constituting elements, may be made thereto. In the embodiment, matters to which design modifications may be made are emphasized with the expression of "embodiment". However, design modifications may also be made to matters without such expression. Also, the hatching provided on the cross sections in the drawings does not limit the materials of the objects with the hatching.

When the technical ideas embodied by the embodiment and modifications set forth above are generalized, it can be said that the technical ideas described in the following items are included.

A first item is a valve, including: an opening part including a cut; a root part of cylindrical shape that forms a flow path continuous with the cut, wherein the flow path widens from one bottom portion in which the opening part is formed, toward the other bottom portion; and a rib part provided on an outer surface of the root part and formed to project in a direction intersecting the cut.

A second item is the valve according to the first item, wherein the rib part is provided to extend from the one bottom portion toward the other bottom portion.

A third item is the valve according to either one of the first and second items, wherein the rib part is formed such as to be connected at one end to the one bottom portion, to extend from the one end in a direction intersecting the cut, to bend and further extend in an axial direction of the root part, and to be connected at the other end to the root part.

A fourth item is the valve according to any one of the first through third items, wherein the root part is inserted into a valve hole located externally, and wherein the rib part comes into contact with an inner surface of the valve hole.

A fifth item is a liquid replenishment container, including: the valve according to any one of the first through third items; a container body that contains a liquid to be replenished to a water discharge device; and a lid part that covers an opening of the container body and includes a valve hole formed therein into which the valve is inserted.

A sixth item is the liquid replenishment container according to the fifth item, wherein the rib part comes into contact with an inner surface of the valve hole.

### INDUSTRIAL APPLICABILITY

The present disclosure relates to a valve and a liquid replenishment container and is applicable to valves and liquid replenishment containers.

### REFERENCE SIGNS LIST

1 water discharge device, 2 liquid replenishment container, 2a container body, 2b opening, 20 lid part, 33, 34 valve hole, 50 supply valve, 52 root part, 53 opening part, 53a cut, 54 rib part, 55 intake valve, 150 valve

## Claims

1. A valve, comprising:
an opening part including a cut;
a root part of cylindrical shape that forms a flow path continuous with the cut, the flow path widening from one bottom portion in which the opening part is formed, toward the other bottom portion; and
a rib part provided on an outer surface of the root part and formed to project in a direction intersecting the cut.

2. The valve according to Claim 1, wherein the rib part is provided to extend from the one bottom portion toward the other bottom portion.

3. The valve according to Claim 1, wherein the rib part is formed such as to be connected at one end to the one bottom portion, to extend from the one end in a direction intersecting the cut, to bend and further extend in an axial direction of the root part, and to be connected at the other end to the root part.

4. The valve according to Claim 1,
wherein the root part is inserted into an external valve hole, and
wherein the rib part comes into contact with an inner surface of the external valve hole.

5. A liquid replenishment container, comprising:
the valve according to any one of Claims 1 through 3;
a container body that contains a liquid to be replenished to a water discharge device; and
a lid part that covers an opening of the container body and includes a valve hole formed therein into which the valve is inserted.

6. The liquid replenishment container according to Claim 5, wherein the rib part comes into contact with an inner surface of the valve hole.
